# EUROPÄISCHE PATENTSCHRIFT

(11) **EP 2 100 201 B1**
(45) Veröffentlichungstag und Bekanntmachung des Hinweises auf die Patenterteilung: **03.08.2011**
(21) Anmeldenummer: 07846729.7
(22) Anmeldetag: 22.11.2007
(51) Int. Cl.: G05D 7/01

(54) **DURCHFLUSSMENGENREGLER**
FLOW-VOLUME REGULATOR
RÉGULATEUR DE DÉBIT

(30) Priorität: 06.12.2006 DE 102006057787
(43) Veröffentlichungstag der Anmeldung: 16.09.2009
(73) Patentinhaber: Neoperl GmbH, 79379 Müllheim (DE)
(72) Erfinder: ZOLLER, Uwe, 08911 Badalona (Barcelona) (ES)
(74) Vertreter: Maucher, Wolfgang
(86) Internationale Anmeldenummer: PCT/EP2007/010105
(87) Internationale Veröffentlichungsnummer: WO 2008/067912

(56) Entgegenhaltungen:
- EP-A- 1 600 839
- DE-U1- 8 703 945
- US-A- 4 867 198

## Beschreibung

Die Erfindung betrifft einen Durchflussmengenregler mit einem ringförmigen Drosselkörper aus elastischem Material, der in Gebrauchsstellung zwischen sich und einer innen- und/oder außenliegenden Regelprofilierung einen Steuerspalt begrenzt, welcher Steuerspalt in seinem lichten Durchflussquerschnitt durch den sich unter der beim Durchströmen des Fluids bildenden Druckdifferenz verformenden Drosselkörper veränderbar ist.

Durchflussmengenregler sind in verschiedenen Ausführungen bereits bekannt. Mit Hilfe solcher Durchflussmengenregler soll die maximale Durchflussmenge eines Fluids pro Zeiteinheit unabhängig von eventuellen Druckschwankungen vergleichmäßigt und auf einen bestimmten Wert festgelegt werden. Sofern es sich bei dem Fluid beispielsweise um das in einer Trinkwasserleitung geführte Trinkwasser handelt, kann einem solchen Durchflussmengenregler am Wasserauslauf einer sanitären Auslaufarmatur auch ein Strahlregler nachgeschaltet sein, der einen homogenen, nicht-spritzenden und gegebenenfalls auch perlend-weichen Wasserstrahl formen soll. Da sich jedoch die durch den Durchflussmengenregler einerseits und einen nachgeschalteten Strahlregler andererseits bewirkten Druckverluste derart addieren können, dass dem abströmseitig angeordneten Strahlregler keine zum Wasserformen ausreichende Wassermenge zur Verfügung steht, kann sich der vorgeschaltete Durchflussmengenregler insbesondere bei geringen Drücken auch auf die Funktion des nachgeschalteten Strahlreglers nachteilig auswirken. Ein Durchflussmengenregler kann sich daher in solchen Gebieten, in denen regelmäßig nur ein geringer Wasserdruck vorherrscht, derart nachteilig auf die zur Verfügung stehende Wassermenge auswirken, dass solche Durchflussmengenregler in solchen Regionen praktisch nicht einsetzbar sind. Dieser Nachteil wird eventuell noch verstärkt, wenn zur Erhöhung des Wasserdrucks sogenannte "booster pumps" eingesetzt werden, die zu hohen Drücken führen, die vorherrschenden Druckunterschiede noch zusätzlich vergrößern und den Einsatz eines vergleichmäßigenden Durchflussmengenreglers erst recht angeraten erscheinen lassen.

In der vorangemeldeten, aber nachveröffentlichten DE 10 2005 011 947 A der Anmelderin ist bereits ein Durchflussmengenregler vorbeschrieben, der eine Veränderung der maximalen Durchflussleistung erlaubt. Der vorbeschriebene Durchflussmengenregler weist in seinem Reglergehäuse einen Durchtrittskanal auf, in dem zwei, in Längserstreckung des Durchtrittskanals hintereinander angeordnete, jeweils aus ringförmigem Drosselkörper und zentralem Regelkern bestehende und für unterschiedliche Durchflussleistungen und/oder unterschiedliche Druckbereiche ausgebildete Regeleinrichtungen vorgesehen sind. Dabei hat die für die geringere Durchflussleistung und/oder den geringeren Druckbereich bestimmte Regeleinrichtung wenigstens einen By-pass-Kanal oder dergleichen Durchtrittsöffnung, die öffen- und schließbar ist und für die höhere Durchflussleistung bzw. für den höheren Druckbereich geöffnet und für die geringere Durchflussleistung bzw. den geringeren Druckbereich geschlossen ist. Bei diesem vorbeschriebenen Durchflussmengenregler sind also zwei Regeleinrichtungen vorgesehen, die für unterschiedliche Durchflussleistungen und/oder verschiedene Druckbereiche bestimmt sind. Für die geringere Durchflussleistung bzw. den geringeren Druckbereich ist die zumindest eine Durchtrittsöffnung an der für die geringere Durchflussmenge bzw. den geringeren Druckbereich bestimmten Regeleinrichtung geschlossen, so dass das Durchströmmedium, beispielsweise Wasser, sowohl den Fließweg zwischen Regelkern und Drosselkörper für die höhere Durchflussleistung bzw. den höheren Druckbereich als auch den Fließweg zwischen Regelkern und Drosselkörper der Regeleinrichtung für die geringere Durchflussleistung bzw. den geringeren Druckbereich passieren muss. Dabei wird die Charakteristik des vorbeschriebenen Durchflussmengenreglers durch die, für die geringere Durchflussleistung bzw. den geringeren Druckbereich bestimmte Regeleinrichtung festgelegt.

Für die höhere Durchflussleistung bzw. den höheren Druckbereich ist die zumindest eine Durchtrittsöffnung an der Regeleinrichtung für die geringere Durchflussmenge bzw. den geringeren Druckbereich geöffnet, so dass das Durchströmmedium, beispielsweise Wasser, nur den Fließweg zwischen Regelkern und Drosselkörper der Regeleinrichtung für die höhere Durchflussleistung bzw. den höheren Druckbereich, jedoch nicht den Fließweg zwischen Regelkern und Drosselkörper der Regeleinrichtung für die geringere Durchflussleistung bzw. den geringeren Druckbereich passieren kann, sondern die Regeleinrichtung für die geringere Durchflussleistung bzw. den geringeren Druckbereich durch die Durchtrittsöffnung umgeht. In diesem Fall wird die Charakteristik des vorbeschriebenen Durchflussmengenreglers nur durch die Regeleinrichtung für die höhere Durchflussleistung bzw. den höheren Druckbereich bestimmt. Somit kann die maximale Durchflussleistung bzw. der vorgesehene Druckbereich einfach und schnell durch Öffnen oder Schließen der in DE 10 2005 011 947 A vorgesehenen Durchtrittsöffnung verändert werden.

Mit dem in DE 10 2005 011 947 A vorbeschriebenen Durchflussmengenregler lässt sich zwar die Charakteristik verändern, jedoch ist auch dieser Durchflussmengenregler in solchen Gebieten weniger vorteilhaft einsetzbar, in denen zeitlich und/oder örtlich extreme Druckunterschiede und Druckschwankungen vorherrschen.

Aus der DE 20 2004 008 281 U1 der Anmelderin ist ein weiterer Durchflussmengenregler der eingangs erwähnten Art bekannt. Um bei einem in den Wasserzulauf eines Durchflusserhitzers zwischengeschalteten Durchflussmengenregler die jahreszeitlich bedingten Temperaturunterschiede berücksichtigen zu können, um beispielsweise im Sommer, wenn das zufließende Leitungswasser im Vergleich zum Winter regelmäßig bereits wärmer ist, einen größeren Wasserdurchfluss zu gewährleisten, um das ausströmende Wasser auf dieselbe Temperatur zu bringen, und um dazu die maximale Durchflussleistung mit geringem Aufwand verändern zu können, weist der aus DE 20 2004 008 281 U1 vorbekannte Durchflussmengenregler ein inneres Gehäuseteil auf, das im Reglergehäuse relativ zum Drosselkörper verschieblich geführt ist. Das innere Gehäuseteil ist über ein Steuerelement bedienbar, das am Außenumfang des inneren Gehäuseteiles nach außen vorsteht. Das innere Gehäuseteil wird beidseits seines Steuerelements von einem äußeren Gehäuseabschnitt dichtend umgriffen, welche äußeren Gehäuseabschnitte zueinander ortsfest angeordnet sind. Das innere Gehäuseteil trägt den konischen Regelkern, so dass dieser konische Regelkern relativ zum Drosselkörper derart verschoben werden kann, dass sich durch die Konizität des Regelkerns der zwischen Drosselkörper und Regelkern vorgesehene Steuerspalt und mit ihm der maximale Volumenstrom des Durchflussmengenreglers verändert. Da das innere verschiebliche Gehäuseteil von den äußeren Abschnitten dichtend umgriffen wird, und da das Steuerelement am inneren Gehäuseteil nach außen vorsteht, ist der Volumenstrom des vorbekannten Durchflussmengenreglers auf einfache Weise veränderbar, ohne dass dazu eine Demontage dieses Durchflussmengenreglers erforderlich ist. Da die das innere Gehäuseteil dichtend umgreifenden äußeren Gehäuseabschnitte zueinander ortsfest angeordnet sind, ist mit einer Verschiebung des inneren Gehäuseteiles und des davon getragenen Regelkerns und mit einer Veränderung des Volumenstroms nicht zwangsläufig eine Veränderung der Baulänge des aus DE 20 2004 008 281 U1 vorbekannten Durchflussmengenreglers verbunden. Zwar lässt sich somit bei dem aus DE 20 2004 008 281 U1 vorbekannten Durchflussmengenregler die maximale Durchflussleistung verändern, jedoch können sich auch bei diesem Durchflussmengenregler übergroße Druckunterschiede nachteilig auf eventuell nachgeschaltete Strahlregler oder dergleichen Funktionseinheiten auswirken.

Aus der US-A-4,867,198 ist bereits ein Durchflussmengenregler vorbekannt, der ein mehrteiliges Reglergehäuse hat. Dabei ist in einem abströmseitigen Gehäuseteil ein vom Fluid umspülter Regelkern gehalten, der entgegen der Strömungsrichtung des Fluids konisch spitz zuläuft. Dieser Regelkern wirkt mit einem Drosselkörper aus elastischem Material zusammen, der lochscheibenförmig ausgebildet und in einem zuströmseitigen Gehäuseteil befestigt ist. Durch eine axiale Relativbewegung der Gehäuseteile zueinander lässt sich bestimmen und festlegen, inwieweit der konische Regelkörper in das Loch des lochscheibenförmigen Drosselkörpers vorsteht. Wird der Drosselkörper durch den Druck des anströmenden Fluids verformt, kann sich der Drosselkörper noch zusätzlich derart in Richtung zum Regelkern bewegen, dass sich der zwischen Drosselkörper und Regelkern verbleibende Ringspalt zusätzlich verengt. Da der Ringspalt einerseits durch eine Stellbewegung der Gehäuseteile zueinander und andererseits durch den Druck des anströmenden Fluids verändert werden kann, lässt sich die maximale Durchflussleistung des vorbekannten Durchflussmengenreglers bei Bedarf variieren und auf die gewünschte Durchflussmenge pro Zeiteinheit begrenzen.

Es besteht daher die Aufgabe, einen Durchflussmengenregler der eingangs erwähnten Art zu schaffen, der selbst bei geringen Drücken oder zeitlich und/oder örtlich extremen Druckunterschieden des durchströmenden Fluids stets eine hohe Funktionssicherheit gewährleistet.

Die erfindungsgemäße Lösung dieser Aufgabe besteht bei dem Durchflussmengenregler der eingangs erwähnten Art insbesondere darin, dass die Relativposition von Drosselkörper und Regelprofilierung veränderbar und von einer Ausgangsstellung mit einem im Vergleich zum Steuerspalt größeren lichten Durchflussquerschnitt infolge des anströmenden oder durchströmenden Fluids gegen eine Rückstellkraft in die Gebrauchsstellung bewegbar ist.

Bei dem erfindungsgemäßen Durchflussmengenregler ist die Relativposition von Drosselkörper und Regelprofilierung in axialer Richtung veränderbar und von einer Ausgangsstellung gegen eine Rückstellkraft in die Gebrauchsstellung bewegbar. In der Gebrauchsstellung wird zwischen dem ringförmigen Drosselkörper und der Regelprofilierung ein Steuerspalt begrenzt, dessen lichter Durchflussquerschnitt durch den sich unter der beim

Durchströmen des Fluids bildenden Druckdifferenz verformenden Drosselkörper derart veränderbar ist, dass die maximale Durchflussmenge pro Zeiteinheit vergleichmäßigt und praktisch druckunabhängig auf einen festgelegten Wert begrenzt werden kann. Demgegenüber ist die Relativposition von Drosselkörper und Regelprofilierung in der Ausgangsstellung derart verändert, dass sich ein im Vergleich zum Steuerspalt größerer lichter Durchflussquerschnitt einstellt. Dabei ist die Relativposition von Drosselkörper und Regelprofilierung von der Ausgangsstellung in Folge des anströmenden oder durchströmenden Fluids gegen eine Rückstellkraft in die Gebrauchsstellung bewegbar. Die Rückstellkraft kann derart bemessen werden, dass der Drosselkörper und die Regelprofilierung bei geringen Drücken des durchströmenden Fluids in ihrer Ausgangsstellung verharren; da in dieser Ausgangsstellung sich ein im Vergleich zum Steuerspalt größerer lichter Durchflussquerschnitt zwischen Drosselkörper und Regelprofilierung einstellt, kann das Fluid den erfindungsgemäßen Durchflussmengenregler bei derart geringen Drücken praktisch ungehindert passieren, bis erst mit zunehmendem Druck die Regelfunktion des erfindungsgemäßen Durchflussmengenreglers einsetzt. Selbst in solchen Gebieten, in denen derart geringe Drücke des Fluids üblicherweise nicht zu befürchten sind, ist der erfindungsgemäße Durchflussmengenregler vorteilhaft einsetzbar, weil durch den in der Ausgangsstellung größeren lichten Durchflussquerschnitt auch im Fluid mitgeführte Schmutzpartikel ohne weiteres den Spaltbereich zwischen Drosselkörper und Regelprofilierung passieren und die Regelfunktion des erfindungsgemäßen Durchflussmengenreglers nicht mehr beeinträchtigen können. Der erfindungsgemäße Durchflussmengenregler zeichnet sich daher über alle Druckbereiche hinweg durch eine hohe Funktionssicherheit aus.

Um die Relativfunktion von Drosselkörper und Regelprofilierung verändern zu können, ist es vorteilhaft, wenn der Drosselkörper und/oder die Regelprofilierung im Durchflussmengenregler axial bewegbar angeordnet ist.

Der Drosselkörper kann beispielsweise auf dem durchströmenden Fluid derart aufschwimmen, dass sich der Drosselkörper in Richtung zur Regelprofilierung bewegt. Eine bevorzugte Ausführungsform gemäß der Erfindung sieht jedoch vor, dass die Regelprofilierung an einem vom Drosselkörper in Gebrauchsstellung umgriffenen Regelkern vorgesehen ist, der im Durchflussmengenregler verschieblich geführt und unter dem Druck des anströmenden Fluids in die Gebrauchsstellung bewegbar ist.

Eine funktionssichere Betriebsweise des erfindungsgemäßen Durchflussmengenreglers wird begünstigt, wenn in den Durchflussmengenregler ein Führungszapfen vorsteht, der von dem daran verschieblich geführten Regelkern umgriffen ist.

Dabei sieht eine bevorzugte Ausführungsform gemäß der Erfindung vor, dass der Regelkern ring- und/oder scheibenförmig ausgestaltet ist und/oder eine Führungsöffnung hat.

Möglich ist auch, dass an dem Regelkern ein in Durchströmrichtung orientierter Führungszapfen vorgesehen ist, der in einer zuströmseitig und/oder abströmseitig angeordneten Führungsöffnung verschieblich geführt ist.

Eine bevorzugte Weiterbildung gemäß der Erfindung sieht vor, dass als Rückstellkraft zumindest eine Federwendel vorgesehen ist. Diese Federwendel kann beispielsweise als Druckfeder ausgestaltet sein, die den Regelkern bei nachlassendem Druck des durchströmenden Fluids wieder zurück in die Ausgangsstellung bewegt.

Dabei ist es zweckmäßig, wenn zumindest eine Federwendel den Führungszapfen umgreift und mit ihrem einen Stirnende den Regelkern vorzugsweise abströmseitig beaufschlagt.

Eine Ausführungsform gemäß der Erfindung sieht vor, dass am Regelkern abströmseitig eine Aufnahmehülse vorgesehen ist, die den den Regelkern beaufschlagenden Stirnendbereich der Federwendel in sich aufnimmt.

Eine Weiterbildung gemäß der Erfindung von eigener schutzwürdiger Bedeutung sieht vor, dass der Drosselkörper auf einem sich in Durchströmrichtung erweiternden Aufweitdorn angeordnet und darauf durch den Druck des anströmenden Fluids unter Aufdehnen gegen seine Eigenelastizität von der Ausgangsstellung in die Gebrauchsstellung bewegbar ist. Dabei kann der Aufweitdorn in einem abströmseitigen Teilbereich die Regelprofilierung tragen. Zusätzlich oder stattdessen kann es vorteilhaft sein, wenn der Drosselkörper in Gebrauchsstellung von einer die Regelprofilierung tragenden Umfangswandung umgrenzt oder umhüllt ist. Bei dieser Weiterbildung wird der Drosselkörper von der Gebrauchsstellung in die Ausgangsstellung durch die in ihm selbst gespeicherte, elastische Energie zurückbewegt, die der Drosselkörper aufnimmt, wenn er durch den Druck des anströmenden Fluids von der Ausgangsstellung in die Gebrauchsstellung gebracht wird und sich dabei aufgrund des Aufziehens auf den Aufweitdorn radial dehnen muss. In der Gebrauchsstellung befindet sich der Drosselkörper somit in radial gedehntem Zustand. Wirkt auf den Drosselkörper das Fluid nicht mehr ein, zieht sich der Drosselkörper zusammen und rutscht durch den schrägen Außenumfang des sich in Durchströmrichtung erweiternden Aufweitdorns nach oben in die Ausgangsstellung.

Eine bevorzugte Ausführungsform gemäß der Erfindung besteht darin, dass der Durchflussmengenregler Bestandteil einer sanitären Einbaueinheit ist. Dabei ist es besonders vorteilhaft, wenn die sanitäre Einbaueinheit einen belüfteten oder unbelüfteten Strahlregler hat, der dem Durchflussmengenregler abströmseitig nachgeschaltet ist. Da der erfindungsgemäße Durchflussmengenregler bei geringen Drücken praktisch keinen Strömungswiderstand bildet, steht auch bei geringen Drücken eine ausreichende Menge des Fluids zur Verfügung, um im nachgeschalteten Strahlregler zu einem homogenen, nicht-spritzenden und gegebenenfalls perlenden Wasserstrahl geformt zu werden.

Dabei wird die Handhabung sowie die Montage und Demontage vereinfacht, wenn der Durchflussmengenregler und der Strahlregler der sanitären Einbaueinheit vorzugsweise lösbar miteinander verbunden sind.

Eine bevorzugte Ausführungsform gemäß der Erfindung sieht vor, dass der Strahlregler einen Strahlzerleger hat, der vorzugsweise als Diffusor ausgebildet ist. Zwar kann der Strahlzerleger beispielsweise auch als Lochplatte ausgestaltet sein, die eine Vielzahl kleiner, Einzelstrahlen bildender Durchflusslöcher hat; ein als Diffusor ausgestatteter Strahlzerleger vermag jedoch auch bei niedrigen Drücken den Wasserstrahl vergleichsweise gut zu belüften.

Eine platzsparende Ausführungsform, die sich durch eine vergleichsweise geringe Einbauhöhe auszeichnet, sieht vor, dass am Diffusor des abströmseitig nachgeschalteten Strahlreglers der Führungszapfen vorsteht oder die Führungsöffnung vorgesehen ist.

Eine bevorzugte Ausführungsform gemäß der Erfindung sieht vor, dass der Durchflussmengenregler als ein in eine Fluidleitung einsetzbares Einsetzteil ausgebildet ist. Ein als Einsetzteil ausgebildeter Durchflussmengenregler lässt sich somit bei Bedarf auch nachträglich noch in die entsprechende Fluidleitung einsetzen.

Dabei ist es besonders vorteilhaft, wenn der Durchflussmengenregler an seinem Außenumfang zumindest eine umlaufende Dichtlippe hat, die zwischen dem Durchflussmengenregler und einer Regler-Aufnahme in der Fluidleitung abdichtet. Durch diese am Außenumfang des Durchflussmengenreglers umlaufende Dichtlippe werden unerwünschte Kriechströme vermieden und eine wirkungsvolle Abdichtung des Durchflussmengenreglers im Bereich seines Einbausitzes erreicht. Darüber hinaus sichert die umlaufende Dichtlippe den als Einsetzteil ausgebildeten Durchflussmengenregler und erleichtert dessen Verpressung in der Fluidleitung.

Um die Dichtwirkung und/oder die Haltekraft des als Einsetzteil ausgebildeten Durchflussmengenreglers noch zusätzlich zu begünstigen, kann es vorteilhaft sein, wenn die Dichtlippe mit ihrem freien Lippenende schräg nach außen vorsteht und federelastisch radial nach innen einlenkbar ist.

Um die leichte und störungsfreie Führung der beweglichen Bestandteile des erfindungsgemäßen Durchflussmengenreglers sicherzustellen, kann es vorteilhaft sein, wenn der Drosselkörper und/oder die Regelprofilierung in einem Führungskäfig axial bewegbar angeordnet sind. Dabei werden die beweglichen Bestandteile des erfindungsgemäßen Durchflussmengenreglers zusätzlich verliersicher im Durchflussmengenregler gehalten, wenn der Führungskäfig die axiale Stellbewegung des Drosselkörpers und/oder der Regelprofilierung begrenzt.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1 u. 2: einen als Flip-Flop-Regler ausgestalteten Durch- flussmengenregler in seiner Ausgangsstellung, in welcher ein zentraler Regelkern von einem ihn umgreifenden ringförmigen Drosselkörper aus elastischem Material abgerückt ist, wobei der Durchflussmengenregler in einem Längsschnitt (vgl. Fig. 1) und in einer Draufsicht auf die Zuströmseite (vgl. Fig. 2) gezeigt ist,
- Fig. 3 u. 4: den Durchflussmengenregler aus Fig. 1 und 2 in seiner Gebrauchsstellung, in welcher der zentra- le Regelkern zwischen sich und dem ihn ringför- mig umgreifenden Drosselkörper einen Steuerspalt begrenzt,
- Fig. 5 u. 6: einen Durchflussmengenregler in seiner Ausgangs- oder Ruhestellung, der mit einem abströmseitig vorgesehenen Strahlregler eine sanitäre Einbau- einheit bildet, wobei vom Strahlregler ein axia- ler Führungszapfen vorsteht, an dem der Regel- kern des Durchflussmengenreglers verschieblich geführt ist,
- Fig. 7 u. 8: den Durchflussmengenregler aus Fig. 4 und 6 in seiner Gebrauchsstellung,
- Fig. 9 u. 10: eine ebenfalls aus Strahlregler und Durchfluss- mengenregler bestehende sanitäre Einbaueinheit, wobei der Strahlregler und der in seiner Aus- gangsstellung dargestellte Durchflussmengenreg- ler zwar funktionell getrennt, aber lösbar mit- einander verbunden sind,
- Fig. 11 u. 12: den Durchflussmengenregler aus Fig. 9 und 10 in seiner Gebrauchsstellung,
- Fig. 13 u. 14: einen in seiner Ausgangsstellung gezeigten Durchflussmengenregler, dessen Regelkern mit Hilfe eines einstückig angeformten Führungszap- fens verschieblich geführt ist, der eine Füh- rungsöffnung in einem abströmseitig nachgeschal- teten Strahlregler durchsetzt,
- Fig. 15 u. 16: den Durchflussmengenregler aus Fig. 13 und 14 in seiner Gebrauchsstellung,
- Fig. 17 u. 18: einen mit Fig. 13 bis 16 vergleichbaren Durch- flussmengenregler in seiner Ausgangsstellung, wobei an den Regelkern koaxial zum Führungszap- fen eine Aufnahmehülse einstückig angeformt ist, die den den Regelkern abströmseitig beaufschla- genden Stirnendbereich einer als Rückstellkraft dienenden Druckfeder aufnimmt,
- Fig. 19 u. 20: den Durchflussmengenregler aus Fig. 17 und 18 in seiner Gebrauchsstellung,
- Fig. 21 u. 22: einen Durchflussmengenregler in seiner Ge- brauchsstellung, dessen elastischer Drosselkör- per auf einen sich in Durchströmrichtung konisch erweiternden Aufweitdorn angeordnet ist, wobei der Drosselkörper auf dem Aufweitdorn durch den Druck des anströmenden Fluids unter Aufdehnen gegen seine Eigenelastizität von der Ausgangs- stellung in die Gebrauchsstellung bewegbar ist, in welcher der Drosselkörper von einer Umfangs- wandung umgrenzt oder umhüllt ist, die eine Re- gelprofilierung trägt,
- Fig. 23 u. 24: den Durchflussmengenregler aus Fig. 21 und 22 in seiner Ausgangsstellung, in welcher der Drossel- körper auf dem Aufweitdorn von der die Regelpro- filierung tragenden Umfangswandung abgerückt ist und der sich derart zusammengezogen hat, dass sich ein im Vergleich zum Steuerspalt größerer lichter Durchflussquerschnitt ergibt,
- Fig. 25: einen mit Fig. 1 bis 4 vergleichbaren Durch- flussmengenregler, der mit einem abströmseitig angeordneten Rückschlagventil eine Einbaueinheit bildet, wobei der Durchflussmengenregler und das Rückschlagventil in ihrer unbelasteten Ausgangs- stellung dargestellt sind,
- Fig. 26: die Einbaueinheit aus Fig. 25 in der vom Fluid durchströmten Gebrauchsstellung von Durchfluss- mengenregler und Rückschlagventil,
- Fig. 27: die als Leistungskurve dargestellte Durchfluss- leistung pro Zeiteinheit verschiedener Durch- flussmengenregler, wobei der Kurvenverlauf A die Durchflussleistung einer ungeregelten Fluidlei- tung, der Kurvenverlauf B die Durchflussleistung einer mit einem üblichen Durchflussbegrenzer eingeengten Fluidleitung, der Kurvenverlauf C die Durchflussleistung eines handelsüblichen Durchflussmengenreglers und der Kurvenverlauf D die Durchflussleistung eines erfindungsgemäß ausgestalteten Durchflussmengenreglers zeigt,
- Fig. 28 u. 29: einen, in einem Längsschnitt (vgl. Fig. 28) und in einer Draufsicht (vgl. Fig. 29) gezeigten und mit Figur 1 bis 4 vergleichbaren Durchflussmen- genregler in der Ausgangsstellung seines zentra- len Regelkerns, in welcher der Regelkern von ei- nem ihn umgreifenden ringförmigen Drosselkörper aus elastischem Material abgerückt ist, wobei der Regelkern in einem Führungskäfig unverlier- bar gesichert und geführt ist, und
- Fig. 30 u. 31: den Durchflussmengenregler aus Figur 28 und 29 in seiner Gebrauchsstellung, in welcher der zentrale Regelkern zwischen sich und dem ihn ringförmig umgreifenden Drosselkörper einen Steuerspalt begrenzt.

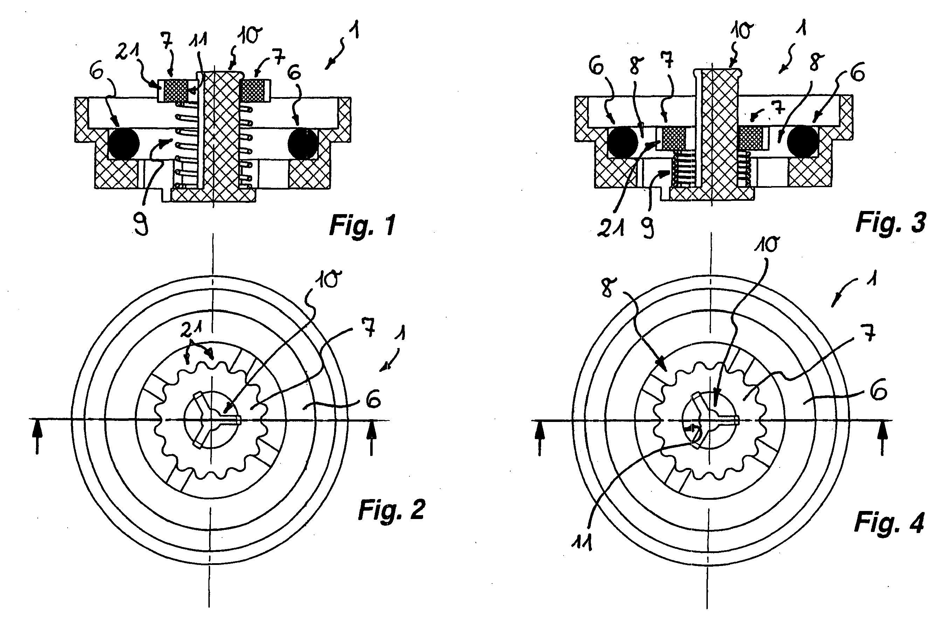

In den Figuren 1 bis 24 und 28 bis 31 ist ein Durchflussmengenregler in den Ausführungen 1, 2, 3, 4, 5, 20 und 40 dargestellt. Diese Durchflussmengenregler nach 1, 2, 3, 4, 5, 20 und 40 sind dazu bestimmt, die durch eine Leitung durchströmende oder vorzugsweise aus einer Leitung ausströmende maximale Durchflussmenge eines Fluids pro Zeiteinheit zu vergleichmäßigen und auf einen vorgegebenen Wert festzulegen. Die hier dargestellten Durchflussmengenregler 1, 2, 3, 4, 5, 20 und 40 sind Bestandteil einer sanitären Einbaueinheit, die beispielsweise in ein nicht weiter dargestelltes Auslaufmundstück eingesetzt und auf diese Weise am Wasserauslauf einer sanitären Wasserauslaufarmatur montiert werden kann.

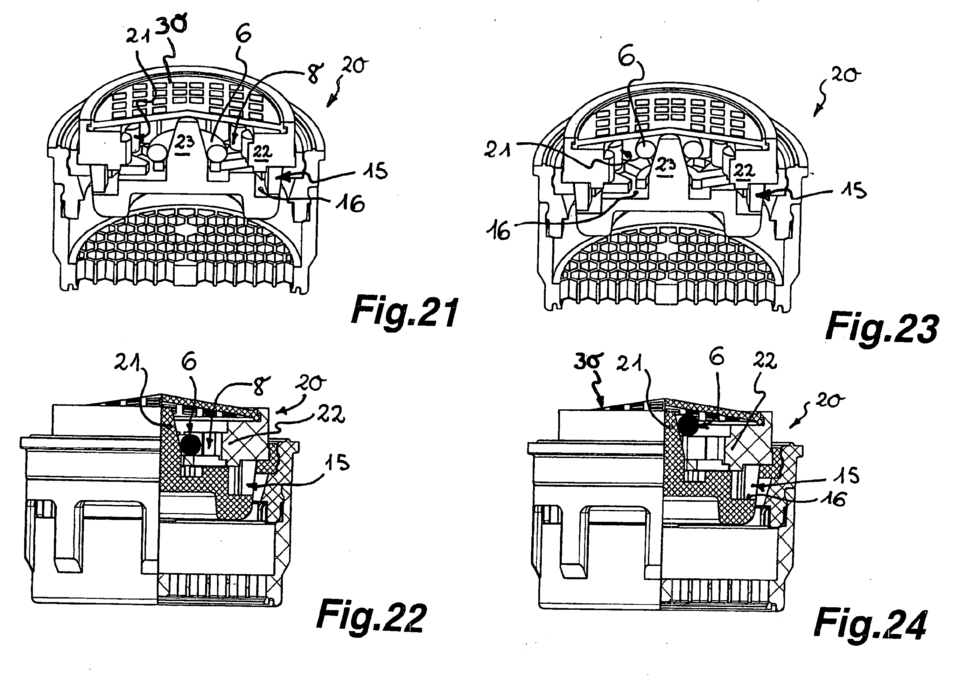

Die Durchflussmengenregler 1, 2, 3, 4, 5, 20 und 40 weisen einen ringförmigen Drosselkörper 6 aus elastischem Material auf, der in einer in den Figuren 3, 4; 7, 8; 11, 12; 15, 16; 19, 20; 21, 22 und 30, 31 gezeigten Gebrauchsstellung zwischen sich und einer innen- und/oder außenliegenden Regelprofilierung 21 einen Steuerspalt 8 begrenzt. Dieser Steuerspalt 8 ist in seinem lichten Durchflussquerschnitt durch den sich unter der beim Durchströmen des Fluids bildenden Druckdifferenz verformenden und mit steigendem Druck zunehmend in die Regelprofilierung 21 einformenden Drosselkörper 6 veränderbar. Aus einem Vergleich der Figuren 1 bis 20 sowie 28 bis 31 einerseits und der Figuren 21 bis 24 andererseits wird deutlich, dass die Regelprofilierung 21 in Relation zum Drosselkörper 6 innen und/oder außen angeordnet sein kann. Während bei den Durchflussmengenreglern 1, 2, 3, 4, 5 und 40 gemäß den Figuren 1 bis 20 und 28 bis 31 die Regelprofilierung 21 am Außenumfang eines vom Drosselkörper 6 umgriffenen Regelkerns 7 angeordnet ist, ist die Regelprofilierung 21 bei dem in Figur 21 bis 24 dargestellten Durchflussmengenregler 20 am Innenumfang einer den Drosselkörper umgrenzenden oder umhüllenden Wandung 22 vorgesehen.

Aus den Figuren 1 bis 20 und 28 bis 31 ist erkennbar, dass der Drosselkörper 6 und der davon umgriffene Regelkern 7 in ihrer Relativposition zueinander zwischen einer in Figur 1, 2; 5, 6; 9, 10; 13, 14; 17, 18 und 28, 29 dargestellten Ausgangsstellung und einer in Figur 3, 4; 7, 8; 11, 12; 15, 16; 19, 20 und 30, 31 gezeigten Gebrauchsstellung bewegbar sind. Während der Drosselkörper 6 in der Gebrauchsstellung zwischen sich und dem Regelkern den Steuerspalt 8 umgrenzt, ist die Relativposition von Drosselkörper 6 und Regelkern 7 in der Ausgangsstellung derart verändert, dass sich ein im Vergleich zum Steuerspalt 8 größerer lichter Durchflussquerschnitt einstellt. Dabei ist die Relativposition von Drosselkörper 6 und Regelkern 7 von der Ausgangsstellung infolge des anströmenden oder durchströmenden Fluids gegen eine Rückstellkraft in die Gebrauchsstellung bewegbar. Die Rückstellkraft kann derart bemessen werden, dass der Drosselkörper 6 und der Regelkern 7 bei einem geringen Druck des zuströmenden Fluids in ihrer Ausgangsstellung verharren; da in dieser Ausgangsstellung sich ein im Vergleich zum Steuerspalt 8 größerer lichter Durchflussquerschnitt zwischen Drosselkörper 6 und Regelkern 7 einstellt, kann das Fluid den Durchflussmengenregler 1, 2, 3, 4, 5 und 40 bei geringen Drücken praktisch ungehindert passieren, bis erst mit zunehmendem Druck die Regelfunktion des Durchflussmengenreglers 1, 2, 3, 4, 5 und 40 einsetzt.

Um die Relativposition von Drosselkörper 6 und Regelkern 7 verändern zu können, ist hier der Regelkern 7 im Durchflussmengenregler 1, 2, 3, 4, 5 und 40 verschieblich geführt und unter dem Druck des anströmenden Fluids in die Gebrauchsstellung bewegbar. Dabei wird der Regelkern 7 abströmseitig von einer hier als Druckfeder ausgestalteten Federwendel 9 beaufschlagt, die als Rückstellkraft dient.

Die hier dargestellten Ausführungen 1, 2, 3, 4, 5 oder 40 des Durchflussmengenreglers stimmen in ihren wesentlichen Funktionen und Merkmalen überein. Sie unterscheiden sich lediglich darin, wie der Regelkern 7 im Durchflussmengenregler geführt ist.

So steht bei den in den Fig. 1 bis 12 und 28 bis 31 dargestellten Ausführungen 1, 2, 3 und 40 ein Führungszapfen 10 in den Durchflussmengenregler vor, der von dem daran verschieblich geführten Regelkern 7 umgriffen ist. Dieser Regelkern 7 ist hier ring- oder scheibenförmig ausgestaltet und hat eine zentrale Führungsöffnung 11, die der Führungszapfen 10 durchsetzt.

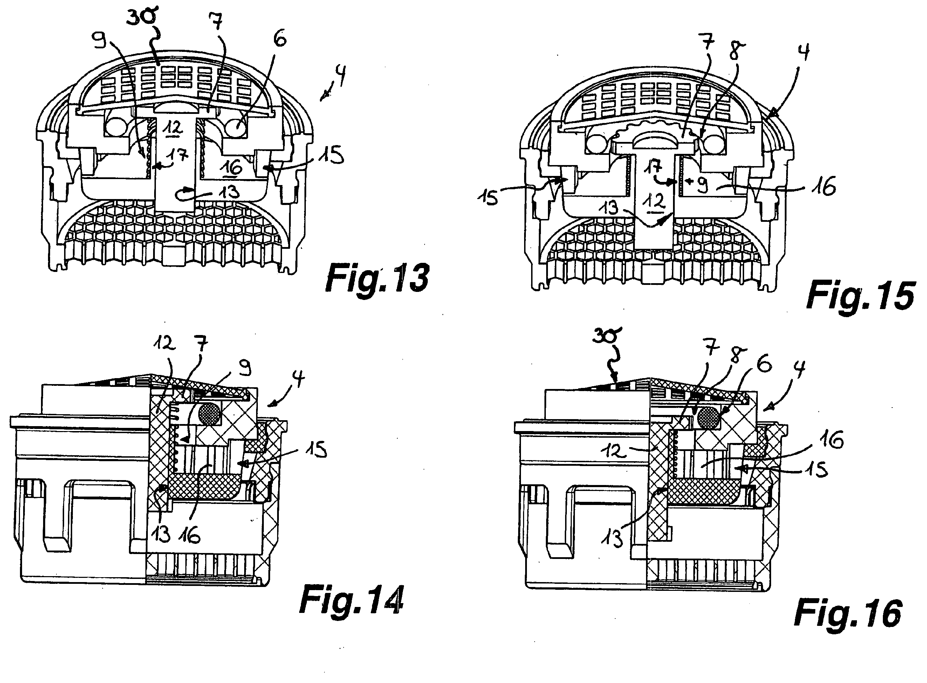

Bei den in den Fig. 13 bis 20 dargestellten Ausführungen 4 und 5 ist an dem Regelkern 7 ein in Durchströmrichtung orientierter Führungszapfen 12 vorgesehen, der in einer abströmseitig angeordneten Führungsöffnung 13 verschieblich geführt ist.

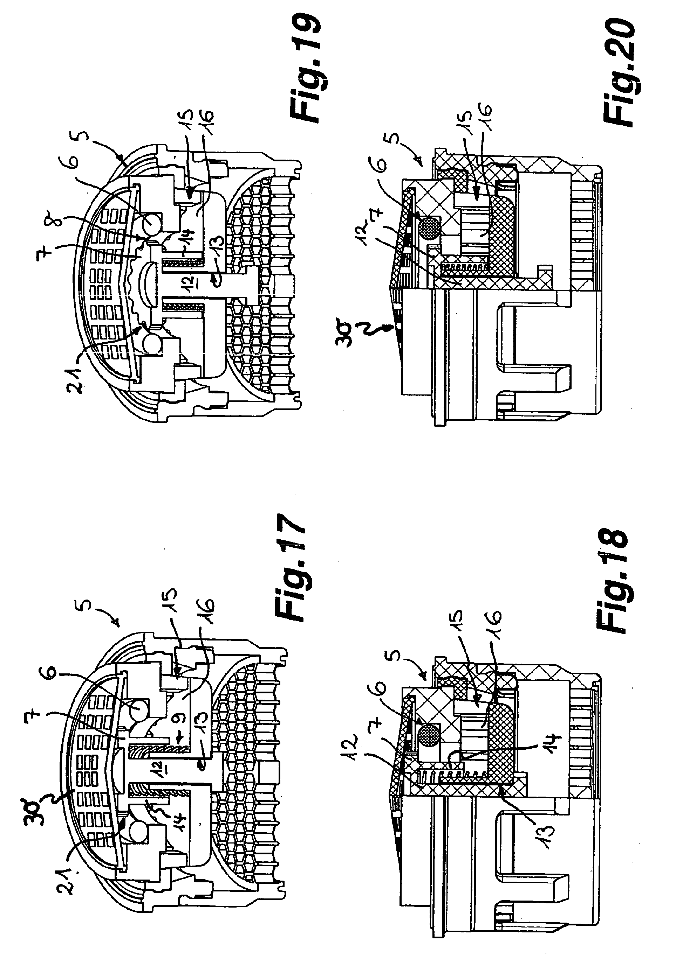

Bei den Fig. 1 bis 20 und 28 bis 31 ist gut zu erkennen, dass die als Rückstellkraft dienende Federwendel 9 den Führungszapfen 10 beziehungsweise 12 umgreift und mit ihrem einen Stirnende den Regelkern 7 abströmseitig beaufschlagt. Dabei weist der Regelkern 7 des in den Fig. 17 bis 20 dargestellten Durchflussmengenreglers 5 abströmseitig eine Aufnahmehülse 14 auf, die den den Regelkern 7 beaufschlagenden Stirnendbereich der Federwendel 9 in sich aufnimmt. Die axiale Längsstreckung dieser Aufnahmehülse 14 ist so bemessen, dass der abströmseitige Stirnendbereich der Aufnahmehülse 14 als Anschlag für den Regelkern 7 in seiner Gebrauchsstellung dient.

Bei dem in den Figuren 21 bis 24 dargestellten Durchflussmengenregler 20 ist der Drosselkörper 6 auf einem Aufweitdorn 23 angeordnet, der sich in Durchströmrichtung des Fluids konisch erweitert und über die Prallfläche eines Diffusors 16 in den Durchflussmengenregler vorsteht. Auf diesem Aufweitdorn 23 ist der Drosselkörper 6 durch den Druck des anströmenden Fluids unter Aufdehnen gegen die Eigenelastizität seines elastischen Materials von der in Fig. 23 und 24 gezeigten Ausgangsstellung in die in Fig. 21 und 22 dargestellte Gebrauchsstellung bewegbar. In der Gebrauchsstellung wirkt der Drosselkörper 6 des Durchflussmengenreglers 20 mit der außenliegenden Regelprofilierung 21 zusammen, die am Innenumfang einer den Drosselkörper umgebenden Wandung 22 vorgesehen ist.

Bei dem Durchflussmengenregler 20 gemäß den Figuren 21 bis 24 wird der ringförmige Drosselkörper 6 nicht durch eine Federwendel von seiner Gebrauchsstellung in die Ausgangsstellung zurückbewegt, sondern durch die im Drosselkörper selbst gespeicherte elastische Energie, die der Drosselkörper aufnimmt, wenn er durch den anstehenden Druck des Fluids von der Ausgangsstellung in die Gebrauchsstellung gebracht wird und sich dabei aufgrund des Aufziehens auf den konischen Aufweitdorn 23 radial dehnen muss.

In seiner Gebrauchsstellung befindet sich der Drosselkörper 6 somit in radial gedehntem Zustand. Steht kein Fluid mehr an und wirkt auf den Drosselkörper 6 kein weiterer Druck, zieht sich der Drosselkörper zusammen und rutscht durch den schrägen Außenumfang des konischen Aufweitdorns 23 nach oben in seine Ausgangsstellung zurück. In dieser Ausgangsstellung weist der sich in ungedehntem Zustand befindliche Drosselkörper 6 einen gegenüber der Gebrauchsstellung reduzierten Außenumfang auf, so dass sich ein im Vergleich zum Steuerspalt 8 größerer lichter Durchflussquerschnitt einstellt.

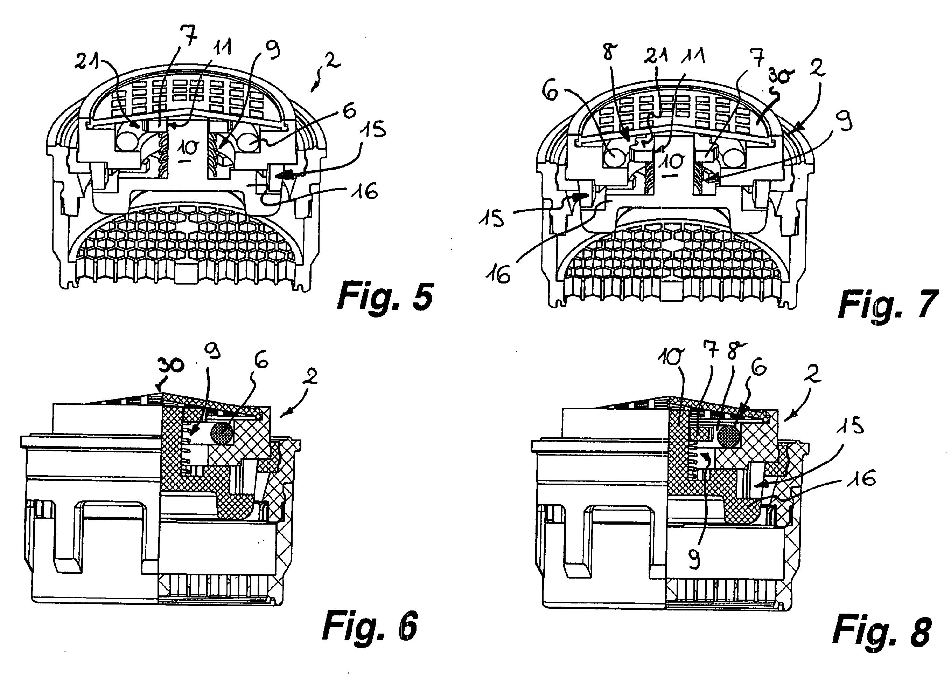

Damit im Wasser mitgeführte Schmutzpartikel die Regelfunktion des Durchflussmengenreglers und der ihm nachgeschalteten sanitären Funktionseinheiten nicht gefährden können, ist den Durchflussmengenreglern 2, 3, 4, 5 und 20 gemäß den Figuren 5 bis 24 ein Vorsatzsieb 30 vorgeschaltet, das in einer zuströmseitigen Siebaufnahme der Mengenregler 2, 3, 4, 5, 20 verrasstet oder dergleichen vorzugsweise lösbar gehalten ist. Um insbesondere bei niedrigen Drücken dem Wasser keinen zusätzlichen hohen Widerstand entgegenzusetzen, sollten die Sieböffnungen des Vorsatzsiebes 30 einen entsprechend großen lichten Durchflussquerschnitt bieten und einen dementsprechend großen Durchmesser haben. Der Gefahr, dass bei einem entsprechend großen Durchmesser der Sieböffnungen auch dementsprechend große Schmutzpartikel das Vorsatzsieb 30 passieren können, wird in vorteilhafter Weise dadurch begegnet, dass durch den in der Ausgangsstellung größeren lichten Durchflussquerschnitt auch im Fluid mitgeführte Schmutzpartikel ohne weiteres den Spaltbereich zwischen Drosselkörper 6 und Regelkern 7 passieren und die Regelfunktion des Durchflussmengenreglers nicht mehr beeinträchtigen können.

Aufgrund ihrer in Ausgangsstellung praktisch selbstreinigenden Funktionsweise sind die hier dargestellten Durchflussmengenregler 1, 2, 3, 4, 5, 20 oder 40 selbst in solchen Gebieten vorteilhaft einsetzbar, in denen derart geringe Drücke des Fluids normalerweise nicht zu befürchten sind, - aber im Wasser mitgeführte Schmutzpartikel nicht ausgeschlossen werden können. Wie die in den Fig. 5 bis 24 dargestellten Ausführungen 2, 3, 4, 5 und 20 zeigen, kann dem Durchflussmengenregler ein belüfteter oder auch unbelüfteter Strahlregler 15 abströmseitig nachgeschaltet sein, wobei der Durchflussmengenregler einerseits und der Strahlregler 15 andererseits vorzugsweise lösbar miteinander zu einer sanitären Einbaueinheit verbunden sind.

Die in den Fig. 5 bis 24 dargestellten Strahlregler 15 weisen einen zuströmseitigen Strahlzerleger auf, der den anströmenden Wasserstrom in eine Vielzahl von Einzelstrahlen unterteilt. Dieser Strahlzerleger ist hier als Diffusor 16 ausgebildet, der eine Belüftung der Einzelstrahlen auch bei geringen Druckverhältnissen begünstigt. Möglich ist aber auch, statt des Diffusors 16 eine hier nicht weiter dargestellte Lochplatte als Strahlzerleger vorzusehen.

Während bei der in den Fig. 5 bis 8 dargestellten Ausführung 2 an den Diffusor 16 des abströmseitig nachgeschalteten Strahlreglers ein Führungszapfen 10 vorsteht, an welchem Führungszapfen 10 der Regelkern 7 des vorgeschalteten Durchflussmengenreglers 2 verschieblich geführt ist, ist am Diffusor 16 der in den Fig. 13 bis 16 dargestellten Ausführung die Führungsöffnung 13 vorgesehen, die der am Regelkern 7 vorstehende Führungszapfen 12 verschieblich durchsetzt. In den Fig. 13 bis 16 ist gut zu erkennen, dass sich an die Führungsöffnung 13 zuströmseitig eine Führungshülse 17 anschließt, deren zuströmseitiges Stirnende dem Regelkern 7 als Anschlag in dessen Gebrauchsstellung dient.

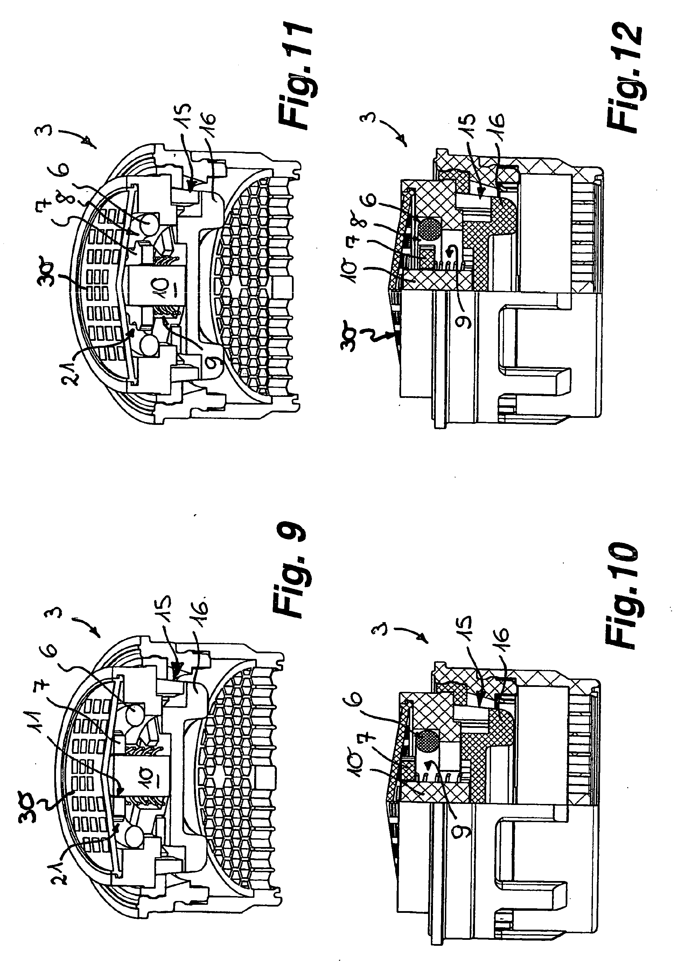

Während bei dem in den Figuren 5 bis 8 dargestellten Durchflussmengenregler 2 der Führungszapfen 10 an die Anströmplatte des Diffusors 16 einstückig angeformt ist, ist bei dem in den Figuren 9 bis 12 gezeigten Durchflussmengenregler 3 der Führungszapfen 10 einstückig mit dem Reglergehäuse des als Einsetzteil ausgebildeten Durchflussmengenreglers 3 verbunden. Wie aus einem Vergleich dieser Figuren deutlich wird, ist der in den Figuren 9 bis 12 gezeigte Durchflussmengenregler 3, der als separate Funktionseinheit ausgebildet ist, auch in Verbindung mit handelsüblichen Strahlreglern verwendbar, wobei der Durchflussmengenregler 3 dabei in den der Anströmplatte des Diffusors 16 vorgeschalteten Freiraum eingesetzt und bei Bedarf mit einem zuströmseitigen Vorsatzsieb 30 verbunden werden kann. Die Verwendung des Durchflussmengenreglers 3 in Verbindung mit handelsüblichen Strahlreglern ist deshalb möglich, weil der in axialer Richtung orientierte Führungszapfen 10 mit dem Reglergehäuse des Durchflussmengenreglers 3 und eben nicht mit dem Diffusor 16 des in Strömungsrichtung nachgeschalteten Strahlreglers verbunden ist.

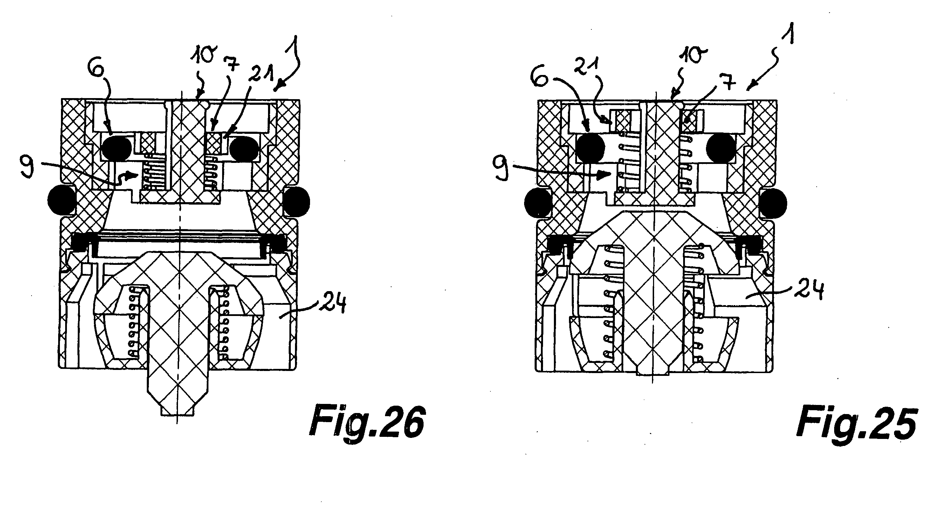

Die hier dargestellten Durchflussmengenregler 1, 2, 3, 4, 5, 20 und 40 sind auch in Verbindung mit anderen sanitären Funktionseinheiten vorteilhaft einsetzbar. So ist in den Fig. 25 und 26 ein mit Fig. 1 bis 4 vergleichbarer Durchflussmengenregler 1 dargestellt, dem abströmseitig ein als Rückschlagventil ausgebildeter Rückflussverhinderer 24 nachgeschaltet ist. Dabei zeigt Fig. 25 die aus Durchflussmengenregler 1 und Rückflussverhinderer 24 bestehende sanitäre Einbaueinheit in der vom Fluid unbelasteten Ausgangsstellung, in welcher der Durchflussmengenregler 1 einen im Vergleich zum Steuerspalt 8 größeren lichten Durchflussquerschnitt aufweist und in welcher der Rückflussverhinderer 24 sich in seiner Schließposition befindet. Demgegenüber ist diese sanitäre Einbaueinheit in Figur 26 in ihrer Gebrauchsstellung dargestellt, in welcher der Drosselkörper 6 zwischen sich und der Regelprofilierung 21 den Steuerspalt 8 begrenzt und in welcher der Rückflussverhinderer 24 sich in seiner Offenstellung befindet. Da beispielsweise bei Schlauchbrausen auf der Zuflussseite der Einbaueinheit der Fall eintreten kann, dass auf der Abflussseite der Druck höher ist als auf der Zuflussseite, ist bei dem Durchflussmengenregler 1 der Rückflussverhinderer 24 nachgeschaltet, der einen Rückstrom des Fluids entgegen der üblichen Durchströmrichtung verhindert.

Mit Hilfe der hier dargestellten Durchflussmengenregler 1, 2, 3, 4, 5, 20 und 40 lässt sich die maximale Durchflussmenge des pro Zeiteinheit durchströmenden Fluids vergleichmäßigen und auf einen bestimmten Wert festlegen. Da die hier dargestellten Durchflussmengenregler 1, 2, 3, 4, 5, 20 und 40 in ihrer Ausgangs- oder Ruhestellung dem zuströmenden Wasser oder dergleichen Fluid nur einen vergleichsweise geringen Widerstand entgegensetzen, sind die Durchflussmengenregler auch in solchen Gebieten vorteilhaft einsetzbar, in denen zeitlich und/oder örtlich extreme Druckunterschiede und Druckschwankungen vorherrschen. Selbst in solchen Regionen, die sich durch einen konstant hohen Wasserdruck auszeichnen, sind die hier dargestellten Durchflussmengenregler vorteilhaft einsetzbar, weil in der Ausgangsstellung dieser Durchflussmengenregler die im Fluid mitgeführten Schmutzpartikel den Spaltbereich passieren und die Funktion des Durchflussmengenreglers nicht mehr beeinträchtigen können.

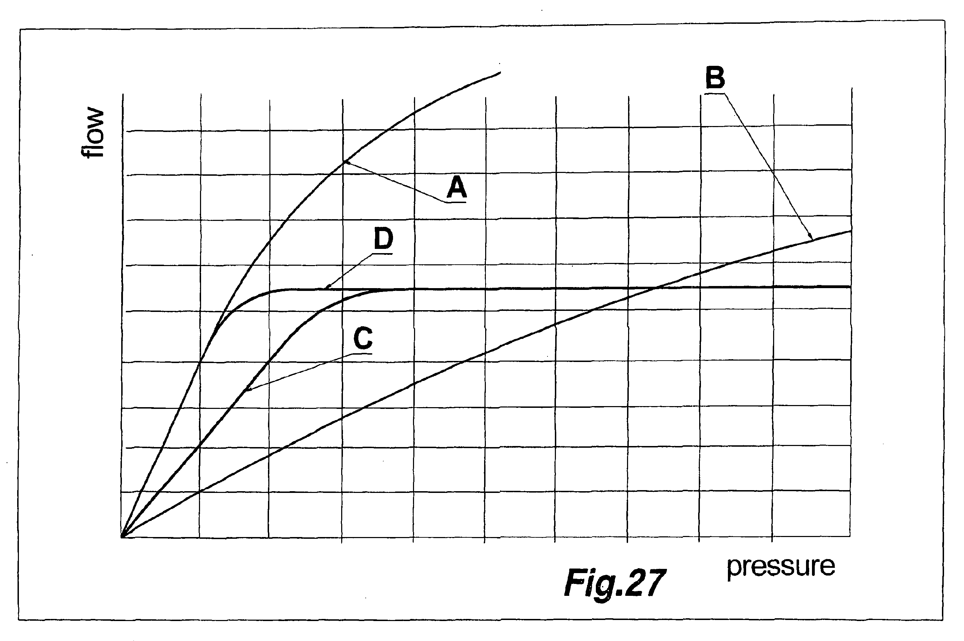

In Figur 27 ist die Durchflussleistung pro Zeiteinheit eines der hier dargestellten Durchflussmengenregler 1, 2, 3, 4, 5 und 20 im Vergleich zu anderen Ausführungsbeispielen dargestellt. Der Kurvenverlauf A zeigt die Durchflussleistung einer ungeregelten Fluidleitung. Um beispielsweise einen durch Normen festgelegten, maximal zulässigen Durchfluss bei vorgegebenem Druck einhalten zu können, und um die Durchflussleistung pro Zeiteinheit einer solchen Fluidleitung zu reduzieren, kann in die Fluidleitung ein beispielsweise als einfache Drosselscheibe ausgebildeter Durchflussbegrenzer zwischengeschaltet sein; der Kurvenverlauf B zeigt die Durchflussleistung einer, durch einen derartigen Durchflussbegrenzer gedrosselten Fluidleitung. Die Durchflussleistung pro Zeiteinheit kann mit Hilfe eines Durchflussmengenreglers auf einen bestimmten druckunabhängigen Maximalwert einregelt werden; der Kurvenverlauf C zeigt die Durchflusscharakteristik eines handelsüblichen Durchflussmengenreglers gemäß dem Stand der Technik, wobei die im Vergleich zu einer ungeregelten Fluidleitung stark reduzierte Durchflussleistung bei geringen Drücken des Fluids gut erkennbar ist. Demgegenüber zeigt der Kurvenverlauf D die Durchflussleistung eines der hier dargestellten Durchflussmengenreglers 1, 2, 3, 4, 5 oder 20. Im Vergleich zu den Leistungskurven A und C ist gut zu erkennen, dass die hier dargestellten Durchflussmengenregler 1, 2, 3, 4, 5 oder 20 die Durchflussleistung pro Zeiteinheit bei geringen Drücken nicht nennenswert beeinträchtigen, um bei Erreichen eines bestimmten Wasserdrucks auf eine festgelegte maximale Durchflussleistung pro Zeiteinheit einzuregeln, die selbst bei weiter steigendem Druck des Fluids beibehalten und nicht überschritten wird.

Die hier dargestellten Durchflussmengenregler 1, 2, 3, 4, 5, 20 oder 40 lassen sich beispielsweise auch in sanitären Versorgungsleitungen und insbesondere in Gas- und vorzugsweise in Wasserleitungen vorteilhaft einsetzen.

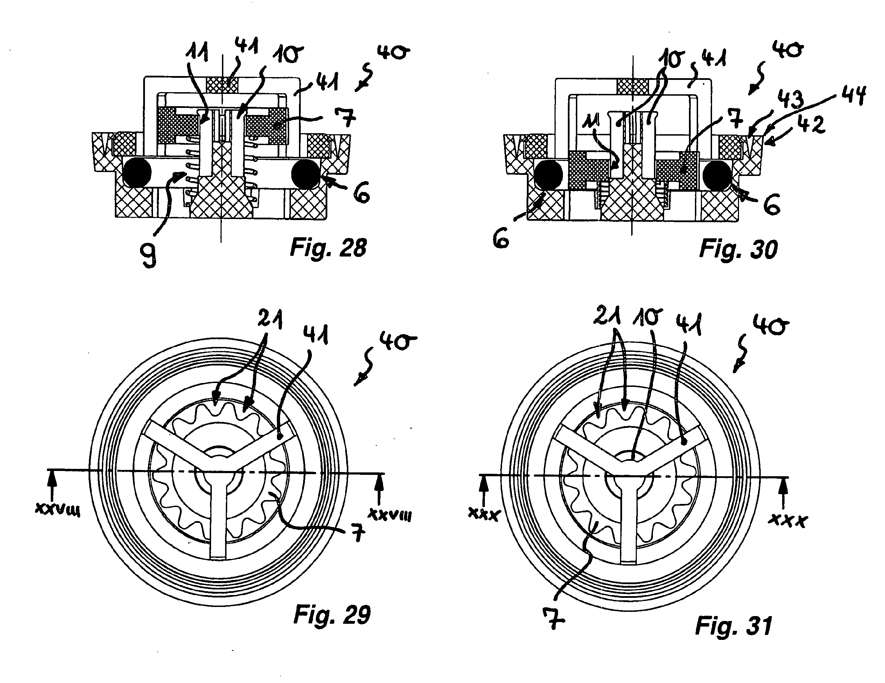

Der in den Figuren 28 bis 31 gezeigte Durchflussmengenregler 40 weist einen entgegen der Durchströmrichtung axial vorstehenden Führungskäfig 41 auf, in welchem der die Regelprofilierung 21 tragende Regelkern 7 axial verschieblich geführt ist. Dieser Führungskäfig 41 verhindert ein unerwünschtes Aufschwimmen und Wegschwimmen des Regelkerns 7 bei Rückflüssen des durchfließenden Fluids. Da der Führungskäfig 41, wie aus Figur 28 erkennbar ist, die axiale Stellbewegung des Regelkerns 7 begrenzt, wird der Regelkern 7, der nur schwach auf den Führungszapfen 10 aufgerastet ist, im Durchflussmengenregler 40 gehalten und die ordnungsgemäße Funktion des Durchflussmengenreglers 40 zusätzlich gesichert.

Es versteht sich, dass zumindest einzelne Bestandteile der hier dargestellten Durchflussmengenregler eine Farbcodierung tragen können, die dem Anwender einen Hinweis auf den Anwendungsbereich oder die Regelcharakteristik des so gekennzeichneten Durchflussmengenreglers geben. So kann der Führungskäfig 41 des Durchflussmengenreglers 40 in blauer oder in roter Farbe gehalten sein, je nach dem, ob diese Reglerausführung 40 für den Kalt- oder Heißwasserbereich bestimmt ist. Auch kann die Farbe zumindest einzelner Bestandteile, zum Beispiel des Führungskäfigs 41, einen Hinweis auf die Federkraft der verwendeten Rückstellfeder 9 und somit auf die Regelcharakteristik des so gekennzeichneten Durchflussmengenreglers 40 geben.

Aus den Figuren 28 bis 31 wird deutlich, dass auch der hier dargestellte Durchflussmengenregler 40 als ein, in eine Fluidleitung einsetzbares Einsetzteil ausgebildet ist. Dabei weist der Durchflussmengenregler 40 an seinem Außenumfang zumindest eine umlaufende Dichtlippe 42 auf, die zwischen dem Durchflussmengenregler 40 und einer Regler-Aufnahme in der Fluidleitung abdichtet. Die Dichtlippe 42, die vom Außenumfang des Reglergehäuses durch eine in Zuströmrichtung offene und hier etwa keilförmig ausgebildete Nut 43 abgetrennt ist, steht mit ihrem freien Lippenende 44 schräg nach außen vor und ist federelastisch radial nach innen einlenkbar. Durch die am Durchflussmengenregler 40 vorgesehene Dichtlippe 42 läßt sich nicht nur eine gute Abdichtung im Bereich zwischen Durchflussmengenregler und der ihn umgebenden Regler-Aufnahme erreichen, vielmehr begünstigt die Dichtlippe 42 auch den festen Halt des Durchflussmengenreglers 40 in dieser hier allerdings nicht gezeigten Regler-Aufnahme.

## Patentansprüche

1. Durchflussmengenregler (1, 2, 3, 4, 5, 20) mit einem ringfo̊rmigen Drosselkörper (6) aus elastischem Material, der in Gebrauchsstellung zwischen sich und einer innen- und/ oder außenliegenden Regelprofilierung (21) einen Steuerspalt (8) begrenzt, welcher Steuerspalt (8) in seinem lichten Durchflussquerschnitt durch den sich unter der beim Durchströmen des Fluids bildenden Druckdifferenz verformenden Drosselkörper (6) veränderbar ist, **dadurch gekennzeichnet, dass** die Relativposition von Drosselkörper (6) und Regelprofilierung (21) veränderbar und von einer Ausgangsstellung mit einem im Vergleich zum Steuerspalt (8) größeren lichten Durchflussquerschnitt in Folge des anströmenden oder durchströmenden Fluids gegen eine Rückstellkraft in die Gebrauchstellung bewegbar ist.

2. Durchflussmengenregler nach Anspruch 1, **dadurch gekennzeichnet, dass** der Drosselkörper (6) und/oder die Regelprofilierung (21) im Durchflussmengenregler (1, 2, 3, 4, 5, 20 und 28 bis 31) axial verstellbar angeordnet ist.

3. Durchflussmengenregler nach Anspruch 1 oder 2, **dadurch gekennzeichnet, dass** die Regelprofilierung (21) an einem vom Drosselkörper (6) in Gebrauchsstellung umgriffenen Regelkern (7) vorgesehen ist, der (7) im Durchflussmengenregler (1, 2, 3, 4, 5) verschieblich geführt und unter dem Druck des anströmenden Fluids in die Gebrauchsstellung bewegbar ist.

4. Durchflusemengenregler nach einem der Ansprüche 1 bis 3, **dadurch gekennzeichnet**, in den Durchflussmengenregler (1, 2, 3) ein Führungszapfen (10) vorsteht, der von dem daran verschieblich geführten Regelkern (7) umgriffen ist.

5. Durchflussmengenregler nach einem der Ansprüche 1 bis 4, **dadurch gekennzeichnet, dass** der Regelkern (7) ring- und/oder scheibenförmig ausgestaltet ist und/oder eine Führungsöffnung (11) hat.

6. Durchflussmengenregler nach einem der Ansprüche 1 bis 5, **dadurch gekennzeichnet, dass** an dem Regelkern (7) ein in Durchströmrichtung orientierter Führungszapfen (12) vorgesehen ist, der in einer zuströmseitig und/oder abströmseitig angeordneten Führungsöffnung (13) verschieblich geführt ist.

7. Durchflussmengenregler nach einem der Ansprüche 1 bis 6, **dadurch gekennzeichnet, dass** als Rückatellkraft zumindest eine Federwendel (9) vorgesehen ist.

8. Durchflussmengenregler nach einem der Ansprüche 1 bis 7, **dadurch gekennzeichnet, dass** zumindest eine Federwendel (9) den Führungszapfen (10, 12) umgreift, und mit ihrem einen Stirnende den Regelkern (7) vorzugsweise abströmseitig beaufschlagt.

9. Durchflussmengenregler nach einem der vorstehenden Ansprüche, **dadurch gekennzeichnet, dass** am Regelkern (7) abströmseitig eine Aufnahmehülse (14) vorgesehen ist, die den den Regelkern (7) beaufschlagenden Stirnendbereich der Federwendel (9) in sich aufnimmt.

10. Durchflussmengenregler nach einem der vorstehenden Ansprüche, **dadurch gekennzeichnet, dass** der Drosselkörper (6) auf einem sich in Durchströmrichtung erweiternden Aufweitdorn (23) angeordnet und darauf durch den Druck des anströmenden Fluids unter Aufdehnen gegen seine Eigenelastizität von der Ausgangsstellung in die Gebrauchsstellung bewegbar ist.

11. Durchflussmengenregler nach Anspruch 10, **dadurch gekennzeichnet, dass** der Drosselkörper (6) in der Gebrauchsstellung von einer die Regelprofilierung (21) tragenden Wandung (22) umgrenzt oder umhüllt ist.

12. Durchflussmengenregler nach einem der Ansprüche 1 bis 11, **dadurch gekennzeichnet, dass** der Durchflussmengenregler (1, 2, 3, 4, 5, 20) Bestandteil einer sanitären Einbaueinheit ist.

13. Durchflussmengenregler nach einem der Ansprüche 1 bis 12, **dadurch gekennzeichnet, dass** die sanitäre Einbaueinheit einen belüfteten oder unbelüfteten Strahlregler (15) hat, der dem Durchflussmengenregler (2, 3, 4, 5, 20) abströmseitig nachgeschaltet ist.

14. Durchflussmengenregler nach einem der Ansprüche 1 bis 13, **dadurch gekennzeichnet, dass** die sanitäre Einbaueinheit einen Rückflusoverhinderer (24) hat, der dem Durchflussmengenregler (1) abströmseitig nachgeschaltet ist.

15. Durchflussmengenregler nach einem der Ansprüche 1 bis 14, **dadurch gekennzeichnet, dass** die Bestandteile (2, 3, 4, 5, 15, 20, 24) der sanitären Einbaueinheit, vorzugsweise lösbar miteinander verbunden sind.

16. Durchflussmengenregler nach einem der vorstehenden Ansprüche, **dadurch gekennzeichnet, dass** der Strahlregler (15) einen Strahlzerleger hat, der vorzugsweise als Diffusor (16) ausgebildet ist.

17. Durchflussmengenregler nach einem der vorstehenden Ansprüche, **dadurch gekennzeichnet, dass** am Diffusor (16) des abströmseitig nachgeschalteten Strahlreglers (15) der Führungszapfen (10) oder die Führungsöffnung (13) vorgesehen ist.

18. Durchflussmengenregler nach einem der Ansprüche 1 bis 17, **dadurch gekennzeichnet, dass** der Durchflussmengenregler (1, 2, 3, 4, 5, 20, 40) als ein in eine Fluidleitung einsetzbares Einsetzteil ausgebildet ist.

19. Durchflussmengenregler nach einem der Ansprüche 1 bis 18, **dadurch gekennzeichnet, dass** der Durchflussmengenregler (40) an seinem Außenumfang zumindest eine umlaufende Dichtlippe (42) hat, die zwischen dem Durchflussmengenregler (40) und einer Regler-Aufnahme in der Fluidleitung abdichtet.

20. Durchflussmengenregler nach einem der Ansprüche 1 bis 19, **dadurch gekennzeichnet, dass** die Dichtlippe (42) mit ihrem freien Lippenende (44) schräg nach außen vorsteht und federelastisch radial nach innen einlenkbar ist.

21. Durchflussmengenregler nach einem der Ansprüche 1 bis 20, **dadurch gekennzeichnet, dass** der Drosselkörper (6) und/ oder die Regelprofilierung (21) in einem Führungskäfig (41) axial bewegbar angeordnet sind.

22. Durchflussmengenregler nach einem der Ansprüche 1 bis 21, **dadurch gekennzeichnet, dass** der Führungskäfig (41) die axiale Stellbewegung des Drosselkörpers (6) und/oder der Regelprofilierung (21) begrenzt.

## Claims

1. Flow rate regulator (1, 2, 3, 4, 5, 20) having an annular flow restrictor (6) made of elastic material which in the position of use defines a control gap (8) between itself and a regulating profile (21) provided on the inside or outside, said control gap (8) being variable in its internal cross-section of flow by means of the flow restrictor (6) that is deformed under the pressure difference produced as the fluid flows through, **characterised in that** the relative position of the flow restrictor (6) and regulating profile (21) is variable and is movable, counter to a restoring force, from a starting position having an internal cross-section of flow that is greater than that of the control gap (8) as a result of the fluid flowing in or through, into the position of use.

2. Flow rate regulator according to claim 1, **characterised in that** the flow restrictor (6) and/or the regulating profile (21) in the flow rate regulator (1, 2, 3, 4, 5, 20 and 28 to 31) is arranged to be axially adjustable.

3. Flow rate regulator according to claim 1 or 2, **characterised in that** the regulating profile (21) is provided on a regulating core (7) surrounded by the flow restrictor (6) in the position of use, said regulating core (7) being movably guided in the flow rate regulator (1, 2, 3, 4, 5) and being movable into the position of use under the pressure of the inflowing fluid.

4. Flow rate regulator according to one of claims 1 to 3, **characterised in that** projecting into the flow rate regulator (1, 2, 3) is a guide pin (10) which is surrounded by the regulating core (7) slidably guided thereon.

5. Flow rate regulator according to one of claims 1 to 4, **characterised in that** the regulating core (7) is of annular and/or disc-shaped configuration and/or has a guide opening (11).

6. Flow rate regulator according to one of claims 1 to 5, **characterised in that** on the regulating core (7) is provided a guide pin (12) oriented in the direction of throughflow, which is slidably guided in a guide opening (13) disposed on the inflow side and/or on the outflow side.

7. Flow rate regulator according to one of claims 1 to 6, **characterised in that** at least one spring coil (9) is provided as the restoring force.

8. Flow rate regulator according to one of claims 1 to 7, **characterised in that** at least one spring coil (9) surrounds the guide pin (10, 12) and acts upon the regulating core (7) with one of its end faces, preferably on the outflow side.

9. Flow rate regulator according to one of the preceding claims, **characterised in that** an accommodating sleeve (14) is provided on the regulating core (7) on the outflow side, said sleeve accommodating the end face region of the spring coil (9) that acts upon the regulating core (7).

10. Flow rate regulator according to one of the preceding claims, **characterised in that** the flow restrictor (6) is arranged on an enlarging spike (23) that widens out in the direction of throughflow, and is movable thereon from the starting position into the position of use as a result of the pressure of the fluid flowing in, by expanding counter to its inherent elasticity.

11. Flow rate regulator according to claim 10, **characterised in that** in the position of use the flow restrictor (6) is surrounded or encased by a wall (22) that carries the regulating profile.

12. Flow rate regulator according to one of claims 1 to 11, **characterised in that** the flow rate regulator (1, 2, 3, 4, 5, 20) is part of a plumbing assembly unit.

13. Flow rate regulator according to one of claims 1 to 12, **characterised in that** the plumbing assembly unit has a ventilated or non-ventilated jet regulator (15) which is mounted downstream of the flow rate regulator (2, 3, 4, 5, 20) on the outflow side.

14. Flow rate regulator according to one of claims 1 to 13, **characterised in that** the plumbing assembly unit has a backflow preventer (24) which is mounted downstream of the flow rate regulator (1) on the outflow side.

15. Flow rate regulator according to one of claims 1 to 14, **characterised in that** the components (2, 3, 4, 5, 15, 20, 24) of the plumbing assembly unit are preferably releasably connected to one another.

16. Flow rate regulator according to one of the preceding claims, **characterised in that** the jet regulator (15) has a jet disintegrator which is preferably embodied as a diffuser (16).

17. Flow rate regulator according to one of the preceding claims, **characterised in that** the guide pin (10) or the guide opening (13) is provided on the diffuser (16) of the jet regulator (15) provided downstream on the outflow side.

18. Flow rate regulator according to one of claims 1 to 17, **characterised in that** the flow rate regulator (1, 2, 3, 4, 5, 20, 40) is embodied as an insert that can be inserted in a fluid line.

19. Flow rate regulator according to one of claims 1 to 18, **characterised in that** the flow rate regulator (40) has, on its outer circumference, at least one encircling sealing lip (42) which forms a seal between the flow rate regulator (40) and a regulator receptacle in the fluid line.

20. Flow rate regulator according to one of claims 1 to 19, **characterised in that** the sealing lip (42) protrudes diagonally outwards with its free lip end (44) and can be deflected radially Inwards by spring bias.

21. Flow rate regulator according to one of claims 1 to 20, **characterised in that** the flow restrictor (6) and/or the regulating profile (21) is or are arranged to be axially movable in a guide cage (41).

22. Flow rate regulator according to one of claims 1 to 21, **characterised in that** the guide cage (41) delimits the axial positioning movement of the flow restrictor (6) and/or the regulating profile (21).

## Revendications

1. Régulateur de débit (1, 2, 3, 4, 5, 20) avec un corps d'étranglement annulaire (6) en matériau élastique qui, en position d'utilisation, délimite entre lui et un profilage de régulation intérieur et/ou extérieur (21) une fente de commande (8), laquelle fente de commande (8) est modifiable dans sa section de passage par le corps d'étranglement (6) se déformant sous l'effet de la différence de pression qui se forme lors du passage du fluide, **caractérisé en ce que** la position relative du corps d'étranglement (6) et du profilage de régulation (21) est modifiable et, par suite de du fluide affluant ou passant, déplaçable dans la position d'utilisation contre une force de rappel à partir d'une position de départ dans laquelle la section de passage est plus grande que la fente de commande (8).

2. Régulateur de débit selon la revendication 1, **caractérisé en ce que** le corps d'étranglement (6) et/ou le profilage de régulation (21) est disposé de manière réglable axialement dans le régulateur de débit (1, 2, 3, 4, 5, 20 et 28 à 31).

3. Régulateur de débit selon la revendication 1 ou 2, **caractérisé en ce que** le profilage de régulation (21) est prévu sur un noyau de régulation (7) entouré par le corps d'étranglement (6) en position d'utilisation, lequel (7) est guidé en translation dans le régulateur de débit (1, 2, 3, 4, 5) et déplaçable dans la position d'utilisation sous la pression du fluide affluant.

4. Régulateur de débit selon une des revendications 1 à 3, **caractérisé en ce que** dans le régulateur de débit (1, 2, 3) fait saillie un tenon de guidage (10) qui est entouré par le noyau de régulation (7) guidé en translation sur lui.

5. Régulateur de débit selon une des revendications 1 à 4, **caractérisé en ce que** le noyau de régulation (7) est réalisé en forme d'anneau ou de disque et/ou présente une ouverture de guidage (11).

6. Régulateur de débit selon une des revendications 1 à 5, **caractérisé en ce que** sur le noyau de régulation (7) est prévu un tenon de guidage (12) orienté dans la direction de passage, qui est guidé en translation dans une ouverture de guidage (13) disposée du côté du flux entrant et/ou du côté du flux sortant.

7. Régulateur de débit selon une des revendications 1 à 6, **caractérisé en ce qu'**au moins un ressort spiral (9) est prévu en guise de force de rappel.

8. Régulateur de débit selon une des revendications 1 à 7, **caractérisé en ce qu'**au moins un ressort spiral (9) entoure le tenon de guidage (10, 12) et agit par une de ses extrémités frontales sur le noyau de régulation (7) de préférence du côté du flux sortant.

9. Régulateur de débit selon une des revendications précédentes, **caractérisé en ce qu'**un manchon de réception (14) qui reçoit la zone d'extrémité frontale du ressort spiral (9) qui agit sur le noyau de régulation (7) est prévue sur le noyau de régulation (7) du côté du flux sortant.

10. Régulateur de débit selon une des revendications précédentes, **caractérisé en ce que** le corps d'étranglement (6) est disposé sur un mandrin évaseur (23) qui s'évase dans la direction de passage et déplaçable sur celui-ci de la position de départ vers la position d'utilisation sous l'effet du fluide affluant en s'étirant contre son élasticité propre.

11. Régulateur de débit selon la revendication 10, **caractérisé en ce que** le corps d'étranglement (6), dans la position d'utilisation, est délimité ou enveloppé par une paroi (22) qui porte le profilage de régulation (21).

12. Régulateur de débit selon une des revendications 1 à 11, **caractérisé en ce que** le régulateur de débit (1, 2, 3, 4, 5, 20) fait partie d'une unité d'installation sanitaire.

13. Régulateur de débit selon une des revendications 1 à 12, **caractérisé en ce que** l'unité d'installation sanitaire comporte un régulateur de jet (15) ventilé ou non ventilé qui est placé en aval du régulateur de débit (2, 3, 4, 5, 20) du côté du flux sortant.

14. Régulateur de débit selon une des revendications 1 à 13, **caractérisé en ce que** l'unité d'installation sanitaire comporte un dispositif de non-retour (24) qui est placé en aval du régulateur de débit (1) du côté du flux sortant.

15. Régulateur de débit selon une des revendications 1 à 14, **caractérisé en ce que** les composants (2, 3, 4, 5, 15, 20, 24) de l'unité d'installation sanitaire sont de préférence reliés entre eux de manière détachable.

16. Régulateur de débit selon une des revendications précédentes, **caractérisé en ce que** le régulateur de jet (15) comporte un diviseur de jet qui est de préférence réalisé sous la forme d'un diffuseur (16).

17. Régulateur de débit selon une des revendications précédentes, **caractérisé en ce que** le tenon de guidage (10) ou l'ouverture de guidage (13) est prévu(e) sur le diffuseur (16) du régulateur de jet (15) placé en aval du côté du flux sortant.

18. Régulateur de débit selon une des revendications 1 à 17, **caractérisé en ce que** le régulateur de débit (1, 2, 3, 4, 5, 20, 40) est réalisé sous la forme d'un insert pouvant être introduit dans une conduite de fluide.

19. Régulateur de débit selon une des revendications 1 à 18, **caractérisé en ce que** le régulateur de débit (40) comporte sur son pourtour extérieur au moins une lèvre d'étanchéité périphérique (42) qui assure l'étanchéité entre le régulateur de débit (40) et un logement de régulateur dans la conduite de fluide.

20. Régulateur de débit selon une des revendications 1 à 19, **caractérisé en ce que** la lèvre d'étanchéité (42) fait saillie en biais vers l'extérieur par son extrémité de lèvre libre (44) et peut être déviée radialement vers l'intérieur élastiquement.

21. Régulateur de débit selon une des revendications 1 à 20, **caractérisé en ce que** le corps d'étranglement (6) et/ou le profilage de régulation (21) sont disposés de manière à pouvoir se déplacer axialement dans une cage de guidage (41).

22. Régulateur de débit selon une des revendications 1 à 21, **caractérisé en ce que** la cage de guidage (41) limite le mouvement de réglage axial du corps d'étranglement (6) et/ou du profilage de régulation (21).
